# EUROPÄISCHE PATENTANMELDUNG

(11) **EP 1 543 931 A2**
(43) Veröffentlichungstag der Anmeldung: **22.06.2005**
(21) Anmeldenummer: 04029506.5
(22) Anmeldetag: 14.12.2004
(51) Int. Cl.: B29C 33/00

(54) **Bauteil für eine Verkleidung und Verfahren zur Herstellung**

(30) Priorität: 17.12.2003 DE 10359108
(71) Anmelder: MöllerTech GmbH, 33649 Bielefeld (DE)
(72) Erfinder: Armsen, Sven, 33739 Bielefeld (DE); Beckmann, Friedhelm, 32120 Hiddenhausen (DE); Drees, Matthias, 48488 Emsbüren (DE)
(74) Vertreter: Schirmer, Siegfried, Dipl.-Ing.

(57) **Zusammenfassung**

Die Erfindung betrifft ein Bauteil für eine Verkleidung, insbesondere eine Innenraumverkleidung in einem Kraftfahrzeug, sowie ein Verfahren zur Herstellung. Das Bauteil umfaßt ein Grundbauteil aus einem im wesentlichen lichtundurchlässigen Material. In das Grundbauteil ist mindestens ein integriertes Element aus einem mit dem Grundmaterial verträglichen lichtdurchlässigen Material integriert, durch das zum Ausleuchten eines Raumes auf der Innenseite des Grundbauteils Lichtstrahlen von der Außenseite des Grundbauteils zur Innenseite hindurchtreten können.

## Beschreibung

Die Erfindung betrifft ein Bauteil für eine Verkleidung, insbesondere eine Innenraumverkleidung in einem Kraftfahrzeug, mit einem Grundbauteil aus einem im wesentlichen lichtundurchlässigen Grundmaterial sowie ein Verfahren zur Herstellung.

Derartige Verkleidungsbauteile werden in Kraftfahrzeugen beispielsweise als Innenräumverkleidung in Form von Stau-/Ablagefächern verwendet, die als verschließbare oder offene Behältnisse zum Aufnehmen beliebiger Gegenstände dienen, zum Beispiel von Karten, Brillen oder vergleichbare Utensilien der Benutzer des Kraftfahrzeugs.

Bei der Ausleuchtung von Stau-/Ablagefächern tritt oft das Problem auf, daß die installierte Beleuchtung an einer für die möglichst umfangreiche Ausleuchtung des Fachs ungünstigen Stelle untergebracht werden muß und/oder das Beleuchtungselement Stau-/Ablageraum wegnimmt. Da in den Stau-/Ablagefächern häufig auch schwere oder scharfkantige Gegenstände untergebracht werden, ist auch nicht auszuschließen, daß besonders bei Stau-/Ablagefächern in Kraftfahrzeugen durch Eigenbewegung der Gegenstände oder durch abrupte Bremsaktionen die Beleuchtung oder das Beleuchtungsgehäuse beschädigt wird. Außerdem ist für das Beleuchtungselement ein bestimmtes Volumen notwendig, das die Stauraumgröße verringert.

Aber auch der Kofferraum und der Motorraum eines Kraftfahrzeugs oder der Raum, in welchem die Fahrzeuginsassen sitzen, sind häufig zumindest in Teilbereichen auszuleuchten. Hierzu gehört beispielsweise auch der Fußraum. Bedarf für die Möglichkeit zur Beleuchtung im Innenraum eines Kraftfahrzeugs besteht generell im Bereich von Innenverkleidungsteilen, um dem Fahrzeugnutzer eine ausreichende Beleuchtung zur Verfügung zu stellen.

Aufgabe der Erfindung ist es, ein verbessertes Bauteil für eine Verkleidung, insbesondere eine Innenraumverkleidung in einem Kraftfahrzeug, anzugeben, bei dem der an die Verkleidung grenzende Raum möglichst uneingeschränkt nutzbar ist. Darüber hinaus soll erreicht werden, daß das Bauteil für die Verkleidung eine ausreichende Festigkeit/Steifigkeit aufweist.

Diese Aufgabe wird durch ein Bauteil nach dem unabhängigen Anspruch 1 sowie ein Verfahren nach dem unabhängigen Anspruch 22 gelöst.

Vorteilhafte Ausgestaltungen der Erfindung ergeben sich aus den abhängigen Unteransprüchen.

Die Erfindung umfaßt den Gedanken, in ein Grundbauteil aus einem im wesentlichen lichtundurchlässigen Grundmaterial mindestens ein integriertes Element aus einem lichtdurchlässigen Material zu integrieren, durch das zum Ausleuchten eines Raumes auf der Innenseite des Grundbauteils Lichtstrahlen von der Außenseite des Grundbauteils zur Innenseite hindurchtreten können. Auf diese Weise ist ein Bauteil gebildet, daß als Wandabschnitt zur Begrenzung eines wenigstens teilweise auszuleuchtenden Raumes nutzbar ist. Die Möglichkeit für einen Lichteinfall in den Raum ist hierbei mit Hilfe des mindestens einen Elementes aus dem lichtdurchlässigen Material geschaffen, ohne daß bei der Anordnung des Bauteils als Wandabschnitt der für den Benutzer zur Verfügung stehende Nutzraum eingeschränkt wird. Erzielt wird dieses durch die Kombination von einem für das Anwendungsgebiet geeigneten Werkstoff und einem anderen transparenten Material. Das Grundbauteil erhält in geeigneten Bereichen eine Art beleuchtbares Fenster, das aus dem transparenten Material gebildet ist.

Die Herstellung kann beispielsweise im sogenannten Zweikomponentenverfahren erfolgen. Hierbei wird zunächst ein Grundbauteil aus einem Werkstoff (Grundmaterial) hergestellt, wobei die für den transparenten Bereich vorgesehenen Bereiche mittels Schieberelementen verschlossen sind. Nachdem der Werkstoff in eine Werkzeugkavität eingebracht worden ist, werden die Schieberelemente gezogen, so daß entsprechende Öffnungsbereiche freigegeben werden, die es einem anderen Werkstoff für die lichtdurchlässigen Bereiche ermöglichen, diese auszufüllen. Hierdurch entsteht ein homogenes, vorzugsweise einstückiges Bauteil, insbesondere ein Behältnis mit auszuleuchtendem Innenraum, bei dem von außen durch die lichtdurchlässigen Bereiche Lichtstrahlen von Lichtelementen oder Lichtbändern hindurchtreten können.

Das Grundmaterial und das lichtdurchlässige Material können auf Basis miteinander verträglicher Werkstoffe oder miteinander unverträglicher Werkstoffe gebildet sein, wobei im Fall unverträglicher Werkstoffe dem Grundmaterial und/oder dem lichtdurchlässigen Material ein oder mehrere Verträglichkeitsstoffe zugesetzt werden, um eine Verträglichkeit zu erreichen, die bei der Herstellung des Bauteils die Ausbildung einer für die Verträglichkeit von Grundmaterial und lichtdurchlässigem Material typischen Materialwechselwirkung bis hin zur möglichen teilweisen Verschmelzung der Materialien unterstützt.

Die vorgenannten Produktionsbeschreibung ist nur beispielhaft und kann auch im umgekehrten Ablauf erfolgen. Ebenso ist es denkbar, daß ein derartiges Behältnis in einem zweistufigen Arbeitsgang durch eine sogenannten Umsetztechnik zwischen zwei Produktionsanlagen erfolgt oder eine Teilkontur in ein Werkzeug eingelegt und durch den zweiten, verträglichen Werkstoff umspritzt wird. Durch die Verbindung beider Werkstoffe bleibt die Grundfestigkeit erhalten und es können die Vorteile der verschiedenen Produktionstechnologien genutzt werden, insbesondere auf dem Gebiet der Verarbeitung von Kunststoffmaterialien. Dem Fachmann sind verschiedenste Kunststoffmaterialien und die zu ihrer Verarbeitung jeweils geeigneten Technologien bekannt, wie Spritzen, Schäumen, Pressen oder dergleichen.

Es besteht die Möglichkeit, das transparente Material durch Farbstoffe und/oder organische und/oder anorganische Füllstoffe hinsichtlich der Transparenz und/oder der Farbgebung unterschiedlich einzustellen. Geeignete Farbstoffe oder Metallpigmente sind in der Kunststoffindustrie hinreichend bekannt. Als organische Füllstoffe sind beispielsweise Kork und/oder zerkleinerte Schäben von Einjahrespflanzen geeignet. Diese können wiederum durch Farbzusätze mit einer geeigneten Eigenfärbung versehen werden. Auf diese Weise kann die Transparenz der lichtdurchlässigen Bereiche abgestimmt werden, wodurch zwischen einer hellen Beleuchtung und einer stark abgedämmten Beleuchtung von Bereichen des auszuleuchtenden Raumes eine freie Auswahl erfolgen kann.

Des weiteren kann vorgesehen sein, das lichtdurchlässige Material Partikel eines fluoreszierenden Materials umfaßt oder aus einem fluoreszierenden Material ist.

Im Rahmen der Mehrkomponententechnik kann vorgesehen sein, Teilbereiche des Raumes, beispielsweise des Innenraumes eines Stau-/Ablagefaches, stärker auszuleuchten und andere Bereiche in der Beleuchtungsintensität stärker zu reduzieren. Hierbei ist es auch denkbar, daß die gedämpfte Beleuchtung beispielsweise beim Betrieb eines Kraftfahrzeugs bei Einschaltung der Fahrzeugbeleuchtung ebenfalls aktiviert wird und die stärkere Beleuchtung beispielsweise erst nach Betätigung eines Deckelementes in Funktion tritt. Hierbei kann vorgesehen sein, daß bei einem vollständig verschlossenen Behältnis wie beispielsweise einer Kartentasche mit Verschlußdeckel die gedämpfte Beleuchtung von innen nach außer erfolgt und die stärkere Beleuchtung den Innenraum nach Öffnen des Deckels ausleuchtet. Die Farbgebung des beleuchtbaren Bereiches kann hierbei abgestimmt sein auf die Oberflächenfarbe des übrigen Behälters. So können beispielsweise bei einem Handschuhkasten, der auf der Innenseite beflockt ist, die lichtdurchlässigen Elemente ebenfalls auf diese Farbgebung abgestimmt werden.

Als Werkstoffe kommen insbesondere alle Materialien in Betracht, die miteinander verträglich sind und sich somit für die Mehrkomponententechnik eignen. Beispiele hierfür sind die Verwendung von PC/ABS mit PC (PC - Polycarbonat, ABS - Acryl-Butadien-Styrol) oder verstärktes oder unverstärktes Polypropylen mit einem transparenten Polypropylen.

Als Anwendungen kommen alle Behältnisse in Frage, bei denen eine Beleuchtung gewünscht ist. Bezogen auf das Einsatzgebiet in Kraftfahrzeugen sind dieses beispielsweise Handschuhkastenfächer, Ablagefächer in der Mittelkonsole oder Türtaschen. Die Anwendung ist nicht auf verschlossene Staufächer begrenzt. Vielmehr eignen sich die beschriebenen Bauteile auch zur Verwendung für eine indirekte Beleuchtung oder gedämpfte Dauerbeleuchtung bei Dunkelheit für beispielsweise Säulenverkleidungen oder Abdeckungen im Fußraum. Somit kann je nach Wunsch der beleuchtete Bereich durchsichtig und/oder transparent und/oder diffus streuend eingestellt sein. Werden derartige Bauteile beispielsweise im Spritzgießverfahren hergestellt, ergeben sich vielfältige Gestaltungsmöglichkeiten und eine weitgehende Variabilität im Hinblick auf Formgebung und Position der lichtdurchlässigen Elemente, die auch an mehreren Stellen mit unterschiedlichen Designmöglichkeiten angeordnet sein können, sowie eine unterschiedliche Farbgebung.

Die Erfindung wird im folgenden anhand von Ausführungsbeispielen unter Bezugnahme auf eine Zeichnung näher erläutert. Hierbei zeigen:
- Fig. 1: ein Ablagefach mit Deckel, insbesondere zum Einbau in ein Kraftfahrzeug;
- Fig. 2: eine Querschnittsdarstellung des Ablagefachs nach Figur 1;
- Fig. 3: ein Ablagefach mit Deckel, insbesondere zum Einbau in ein Kraftfahrzeug, und Beleuchtungselementen;
- Fig. 4: eine Querschnittsdarstellung des Ablagefachs nach Figur 3;
- Fig. 5: ein weiteres Ablagefach, insbesondere zum Einbau in ein Kraftfahrzeug; und
- Fig. 6: ein anderes Ablagefach, insbesondere zum Einbau in ein Kraftfahrzeug, bei dem lichtdurchlässige Elemente in Kantenbereichen vorgesehen sind.

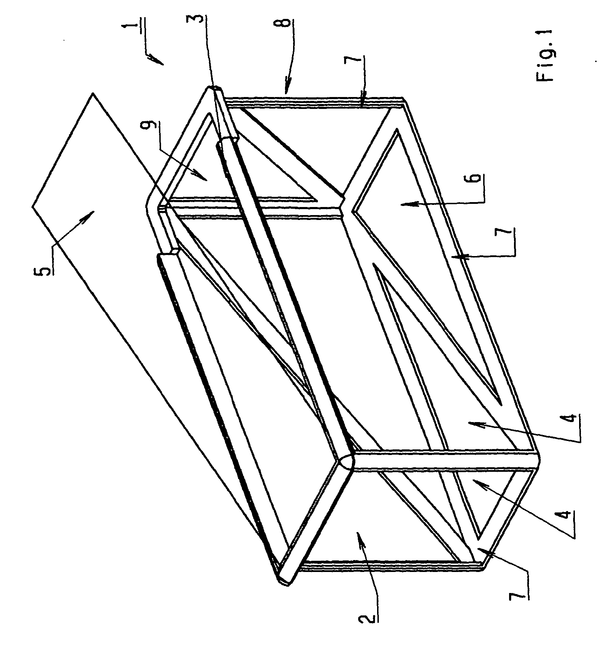

Figur 1 zeigt eine perspektivische Darstellung eines Stau-/Ablagefaches 1, insbesondere zur Verwendung bei einer Innenraumverkleidung in einem Kraftfahrzeug, mit einem Behältnis 2, in dem ein Raum 3 zur Aufnahme von Gegenständen gebildet ist. Der Raum 3 wird von Wandabschnitten 4 umgeben. Das Behältnis 2 kann mit Hilfe eines Deckels 5 geöffnet und geschlossen werden. Der Deckel 5 ist an dem Behältnis 2 verlagerbar, insbesondere schwenkbar angebracht ist. Die Wandabschnitte 4 umfassen Grundbauteile 6 aus einem im wesentlichen lichtundurchlässigen Grundmaterial. In die Grundbauteile 6 sind gemäß Figur 1 mehrere Elemente 7 integriert, die aus einem mit dem Grundmaterial verträglichen lichtdurchlässigen Material gebildet sind. Auf diese Weise können Lichtstrahlen, insbesondere Tageslichtstrahlen oder Lichtstrahlen von einer künstlichen Lichtquelle, durch die integrierten Elemente 7 hindurch von der Außenseite 8 des Behältnisses 2 zur Innenseite 9 in den Raum 3 gelangen, so daß der Raum 3 ausgeleuchtet wird.

Auch im Bereich des Deckels 5 können Elemente aus dem lichtdurchlässigen Material vorgesehen sein. Auf diese Weise ist es beispielsweise möglich, einen auf der Innenseite des Deckels 5 angeordneten Spiegel (nicht dargestellt) zu beleuchten. Hierbei kann vorgesehen sein, daß Beleuchtungselemente, deren Lichtstrahlen durch die integrierten Elemente gelangen, erst eingeschalten werden, wenn der Deckel 5 vom Benutzer geöffnet wird, so daß eine Ausleuchtung für den Spiegel nur erfolgt, wenn dieser benutzt wird. Das Öffnen des Deckels 5 wird mit geeigneten Kontaktmitteln (nicht dargestellt), beispielsweise einem Taster, erfaßt.

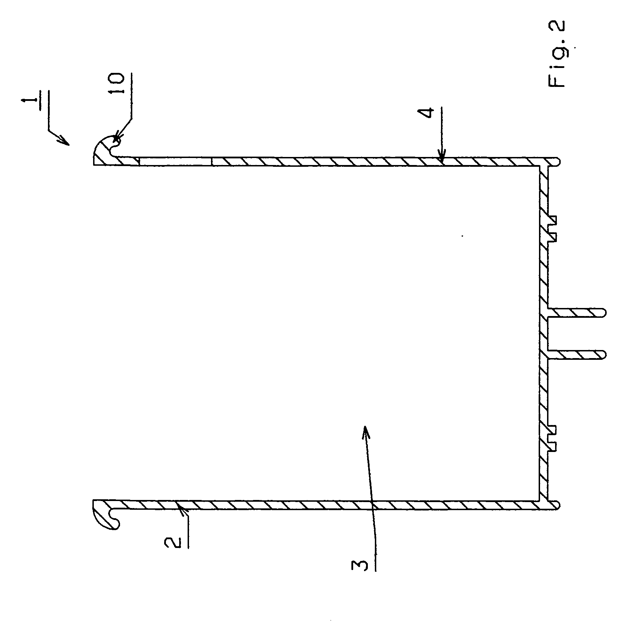

Figur 2 zeigt eine Querschnittsdarstellung des Stau-/Ablagefaches 1 nach Figur 1 entlang einer Linie AB in Figur 1. Die Wandabschnitte 4 weisen eine Randversteifung 10 auf.

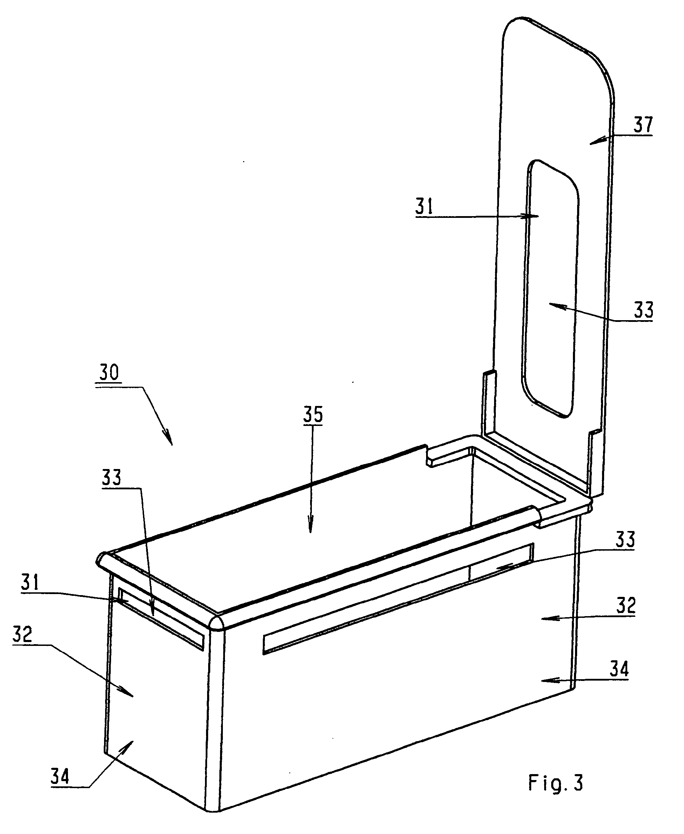

Figur 3 zeigt eine andere Ausführungsform eines Stau-/Ablagefachs 30 mit integrierten Elementen 31 aus einem lichtdurchlässigen Material, das mit einem Grundmaterial von Grundbauteilen 32, in welche die Elemente 31 integriert sind, verträglich ist. Im Bereich der Elemente 31 sind schematisch Lichtquellen 33 angedeutet. Mit Hilfe der Grundbauteile 32 gebildete Wandabschnitte 34 umgeben einen Raum 35 in dem Stau/Ablagefach 30.

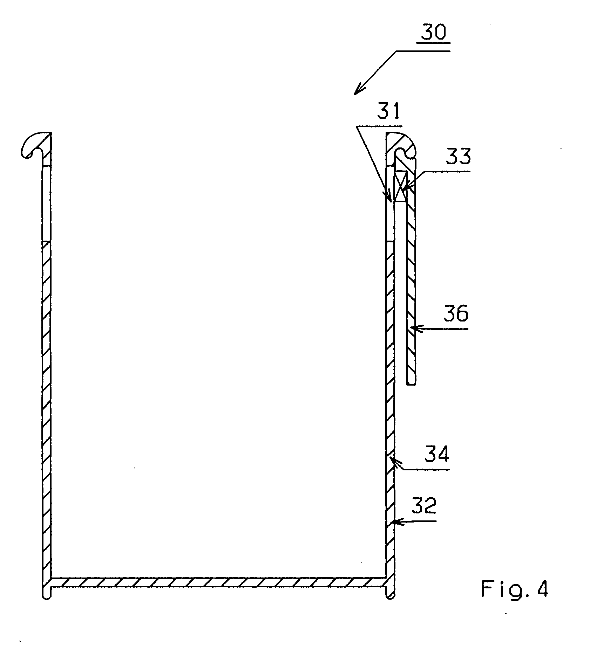

Figur 4 zeigt eine Querschnittsdarstellung des Stau-/Ablagefachs 30 nach Figur 3. Mit Hilfe der Lichtquellen 33 werden Lichtstrahlen erzeugt, die durch die integrierten Elemente 31 aus dem lichtdurchlässigen Material in den Raum 35 in dem Stau/Ablagefach 30 gelangen, um diesen auszuleuchten. Die Lichtquellen 33 werden mit Hilfe von Montagemitteln 36 gehalten, die einstückig an die Wandabschnitte 34 angeformt oder an diesen montiert sind.

Nach Figur 3 verfügt auch ein Deckel 37 über integrierte Elemente 31 aus dem lichtdurchlässigen Material.

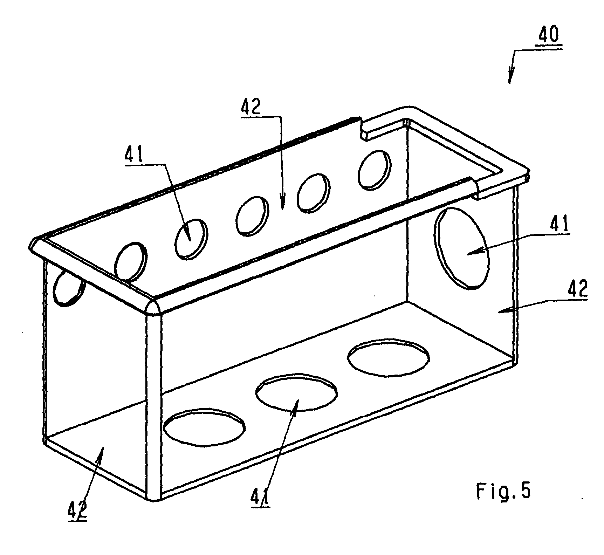

Figur 5 zeigt eine Ausführungsform eines weiteren Stau-/Ablagefachs 40, bei dem hinsichtlich der äußeren Form abgerundete Elemente 41 aus einem lichtdurchlässigen Material über von Grundbauteilen 42 gebildete Randabschnitte verteilt sind.

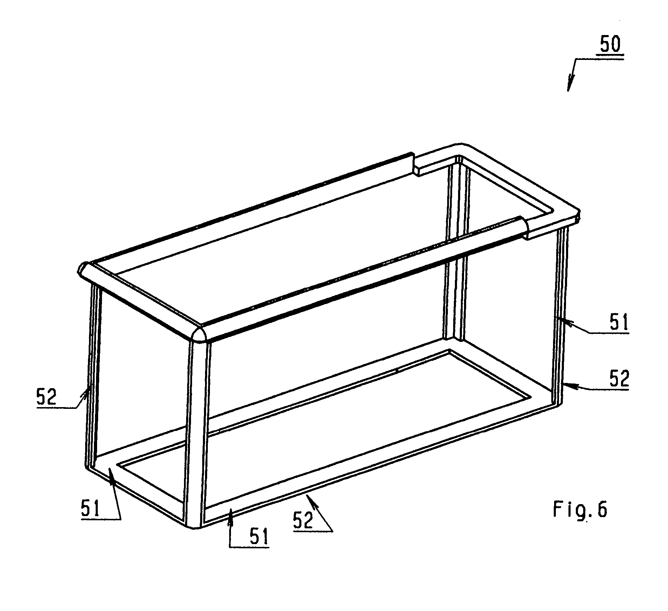

Figur 6 zeigt eine Ausführungsform eines anderen Stau-/Ablagefachs 50, insbesondere zum Einbau in ein Kraftfahrzeug, bei dem lichtdurchlässige Elemente 51 in Kantenbereichen 52 vorgesehen sind.

Die in der vorstehenden Beschreibung, den Ansprüchen und der Zeichnung offenbarten Merkmale der Erfindung können sowohl einzeln als auch in beliebiger Kombination für die Verwirklichung der Erfindung in ihren verschiedenen Ausführungsformen von Bedeutung sein.

### Aufstellung der Bezugszeichen:

- 1,30,40,50: Stau-/Ablagefach
- 2: Behältnis
- 3,35: Raum
- 4,34: Wandabschnitte
- 5,37: Deckel
- 6, 32, 42: Grundbauteile
- 7, 31, 41, 51: integrierte Elemente
- 8: Außenseite
- 9: Innenseite
- 10: Randversteifung
- 33: Lichtquellen
- 36: Montagemittel
- 52: Kantenbereiche

## Patentansprüche

1. Bauteil für eine Verkleidung, insbesondere eine Innenraumverkleidung in einem Kraftfahrzeug, mit einem Grundbauteil aus einem im wesentlichen lichtundurchlässigen Grundmaterial, **gekennzeichnet durch** mindestens ein in das Grundbauteil integriertes Element aus einem lichtdurchlässigen Material, **durch** das zum Ausleuchten eines Raumes auf der Innenseite des Grundbauteils Lichtstrahlen von der Außenseite des Grundbauteils zur Innenseite hindurchtreten können.

2. Bauteil nach Anspruch 1, **dadurch gekennzeichnet, daß** das Grundbauteil ein Wandabschnitt eines Behältnisses ist, bei dem der Raum auf der Innenseite ein Aufnahmeraum zum Aufnehmen von Gegenständen ist.

3. Bauteil nach Anspruch 2, **dadurch gekennzeichnet, daß** das Behältnis ein Ablagefach für eine Innenraumverkleidung in einem Kraftfahrzeug ist.

4. Bauteil nach Anspruch 1, **dadurch gekennzeichnet, daß** das Grundbauteil ein Innenraumverkleidungsteil für ein Kraftfahrzeug ist, beispielsweise eine Säulenverkleidung.

5. Bauteil nach einem der vorangehenden Ansprüche, **dadurch gekennzeichnet, daß** das Grundmaterial und/oder das lichtdurchlässigen Material kunststoffbasierte Materialien sind.

6. Bauteil nach einem der vorangehenden Ansprüche, **dadurch gekennzeichnet, daß** das Grundbauteil und das mindestens eine Element nach einem Mehrkomponentenverfahren hergestellt sind.

7. Bauteil nach einem der vorangehenden Ansprüche, **dadurch gekennzeichnet, daß** das Grundbauteil und das mindestens eine Element einstückig gebildet sind.

8. Bauteil nach einem der vorangehenden Ansprüche, **dadurch gekennzeichnet, daß** das lichtdurchlässige Material zum Einstellen der Lichtdurchlässigkeit einen organischen und/oder einen anorganischen Füllstoff enthält.

9. Bauteil nach Anspruch 8, **dadurch gekennzeichnet, daß** der organische Füllstoff Kork, zerkleinerte Schäben von Einjahrespflanzen, Holzpartikel und/oder Partikel aus Chinaschilf, Kenaf und/oder Öllein umfaßt.

10. Bauteil nach Anspruch 8 oder 9, **dadurch gekennzeichnet, daß** der organische Füllstoff und/oder der anorganische Füllstoff eingefärbt sind.

11. Bauteil nach einem der vorangehenden Ansprüche, **dadurch gekennzeichnet, daß** das lichtdurchlässige Material zum Einstellen der farblichen Erscheinung und/oder der Lichtdurchlässigkeit eine Pigmentierung aufweist.

12. Bauteil nach Anspruch 11, **dadurch gekennzeichnet, daß** die Pigmentierung mit Hilfe eines Farbstoffs und/oder von Metallpigmenten gebildet ist.

13. Bauteil nach einem der vorangehenden Ansprüche, **dadurch gekennzeichnet, daß** das mindestens eine Element Bereiche mit unterschiedlicher Lichtdurchlässigkeit aufweist.

14. Bauteil nach einem der vorangehenden Ansprüche, **dadurch gekennzeichnet, daß** das mindestens eine Element einen durchsichtigen und/oder einen transparenten und/oder einen diffus streuenden Abschnitt aufweist.

15. Bauteil nach einem der vorangehenden Ansprüche, **dadurch gekennzeichnet, daß** an dem Grundbauteil und/oder an dem mindestens einen Element Montagemittel zum Halten einer Lichtquelle auf der Außenseite des Grundbauteils vorgesehen sind.

16. Bauteil nach Anspruch 15, **dadurch gekennzeichnet, daß** die Montagemittel einstückig angeformt sind.

17. Bauteil nach einem der vorangehenden Ansprüche, **dadurch gekennzeichnet, daß** das lichtdurchlässige Material ein mit dem Grundmaterial verträgliches Material ist.

18. Bauteil nach einem der Ansprüche 1 bis 16, **dadurch gekennzeichnet, daß** das lichtdurchlässige Material ein mit dem Grundmaterial nicht verträgliches Material ist, welches mindestens einen die Materialverträglichkeit bewirkenden Zusatzstoff umfaßt.

19. Bauteil nach einem der vorangehenden Ansprüche, **dadurch gekennzeichnet, daß** das lichtdurchlässige Material Partikel eines fluoreszierenden Materials umfaßt.

20. Bauteil nach einem der vorangehenden Ansprüche, **dadurch gekennzeichnet, daß** das lichtdurchlässige Material in Form von Symbolen, Zahlen- oder Buchstabenbeschriftungen oder dergleichen ausgeführt ist.

21. Bauteil nach Anspruch 20, **dadurch gekennzeichnet, daß** die Symbole, Zahlen- oder Buchstabenbeschriftungen oder dergleichen zum Ausbilden einer haptischen Ausgestaltung hinsichtlich des Grundmaterials erhaben gebildet sind.

22. Verfahren zum Herstellen eines Bauteils für eine Verkleidung, insbesondere eine Innenraumverkleidung in einem Kraftfahrzeug, nach einem der Ansprüche 1 bis 21, wobei in ein Grundbauteil aus einem im wesentlichen lichtundurchlässigen Grundmaterial mindestens ein Element aus einem lichtdurchlässigen Material integriert wird, durch das zum Ausleuchten eines Raumes auf der Innenseite des Grundbauteils Lichtstrahlen von der Außenseite des Grundbauteils zur Innenseite hindurchtreten können.

23. Verfahren nach Anspruch 22, **dadurch gekennzeichnet, daß** Bauteil in einer Werkzeugkavität nach einem Mehrkomponentenverfahren hergestellt wird, wobei:
- zunächst das Grundmaterial oder das lichtdurchlässige Material in der Werkzeugkavität eingebracht wird, wobei verlagerbare Schieberelemente im Bereich einer Teilkontur des Bauteils angeordnet sind;
- anschließend die verlagerbaren Schieberelemente aus dem Bereich der Teilkontur des Bauteils bewegt werden, um die Teilkontur als Öffnungsbereich in der Werkzeugkavität freizugeben; und
- das lichtdurchlässige Material oder das Grundmaterial in den Öffnungsbereich in der Werkzeugkavität zum Bilden der Teilkontur eingebracht wird.

24. Verfahren nach Anspruch 22 oder 23, **dadurch gekennzeichnet, daß** Bauteil einstückig hergestellt wird.

25. Verfahren nach Anspruch 22 oder 24, **dadurch gekennzeichnet, daß** das Grundbauteil oder das mindestens eine Element in ein Werkzeug eingelegt und mit dem lichtdurchlässigen bzw. dem Grundmaterial umspritzt wird.

26. Verfahren nach einem der Ansprüche 22 bis 25, **dadurch gekennzeichnet, daß** das Bauteil mittels Umsetztechnik zwischen zwei Herstellungseinrichtungen hergestellt wird.

27. Verfahren nach einem der Ansprüche 22 bis 26, **dadurch gekennzeichnet, daß** als Grundmaterial und/oder als lichtdurchlässiges Material ein oder mehrere kunststoffbasierte Materialien verwendet werden.

28. Verfahren nach einem der Ansprüche 22 bis 27, **dadurch gekennzeichnet, daß** dem lichtdurchlässigen Material zum Einstellen der Lichtdurchlässigkeit ein organischer und/oder ein anorganischer Füllstoff zugegeben wird.

29. Verfahren nach Anspruch 28, **dadurch gekennzeichnet, daß** als organischer Füllstoff Kork, zerkleinerte Schäben von Einjahrespflanzen, Holzpartikel und/oder Partikel aus Chinaschilf, Kenaf und/oder Öllein zugegeben werden.

30. Verfahren nach Anspruch 28 oder 29, **dadurch gekennzeichnet, daß** der organische und/oder der anorganische Füllstoff als eingefärbter Füllstoff zugegeben werden.

31. Verfahren nach einem der Ansprüche 22 bis 30, **dadurch gekennzeichnet, daß** dem lichtdurchlässige Material zum Einstellen der farblichen Erscheinung und/oder der Lichtdurchlässigkeit Pigmente zugegeben werden.

32. Verfahren nach Anspruch 31, **dadurch gekennzeichnet, daß** als Pigmente ein Farbstoff und/oder Metallpigmente zugegeben werden.

33. Verfahren nach einem der Ansprüche 22 bis 32, **dadurch gekennzeichnet, daß** das mindestens eine Element mit Bereichen unterschiedlicher Lichtdurchlässigkeit hergestellt wird.

34. Verfahren nach einem der Ansprüche 22 bis 33, **dadurch gekennzeichnet, daß** das mindestens eine Element mit einem durchsichtigen und/oder einem transparenten und/oder einem diffus streuenden Abschnitt hergestellt wird.

35. Verfahren nach einem der Ansprüche 22 bis 34, **dadurch gekennzeichnet, daß** als lichtdurchlässiges Material ein mit dem Grundmaterial verträgliches Material verwendet wird.

36. Verfahren nach einem nach einem der Ansprüche 22 bis 34, **dadurch gekennzeichnet, daß** als lichtdurchlässiges Material ein mit dem Grundmaterial nicht verträgliches Material verwendet wird, dem mindestens ein die Materialverträglichkeit bewirkender Zusatzstoff zugesetzt wird.

37. Verfahren nach einem der Ansprüche 22 bis 36, **dadurch gekennzeichnet, daß** das lichtdurchlässige Material Partikel eines fluoreszierenden Materials umfaßt.

38. Verfahren nach einem der Ansprüche 22 bis 37, **dadurch gekennzeichnet, daß** das lichtdurchlässige Material in Form von Symbolen, Zahlen- oder Buchstabenbeschriftungen oder dergleichen hergestellt wird.

39. Verfahren nach Anspruch 38, **dadurch gekennzeichnet, daß** die Symbole, Zahlen- oder Buchstabenbeschriftungen oder dergleichen zum Ausbilden einer haptischen Ausgestaltung hinsichtlich des Grundmaterials erhaben gebildet werden.
